# EUROPÄISCHE PATENTSCHRIFT

(11) **EP 0 882 600 B1**
(45) Veröffentlichungstag und Bekanntmachung des Hinweises auf die Patenterteilung: **27.09.2006**
(21) Anmeldenummer: 98109498.0
(22) Anmeldetag: 26.05.1998
(51) Int. Cl.: B41M 5/00

(54) **Inkjet-Druckverfahren und Inkjet-Material**
Inkjet printing method and inkjet material
Procédé et matériau pour d'impression au jet d'encre

(30) Priorität: 06.06.1997 DE 19723779
(43) Veröffentlichungstag der Anmeldung: 09.12.1998
(73) Patentinhaber: Agfa-Gevaert AG, 51373 Leverkusen (DE)
(72) Erfinder: Helling, Günter, Dr., 51519 Odenthal (DE); Hagemann, Jörg, Dr., 51061 Köln (DE); Weber, Beate, Dr., 42799 Leichlingen (DE)
(74) Vertreter: De Niel, Marc Alfons Jozef

(56) Entgegenhaltungen:
- EP-A- 0 673 784
- EP-A- 0 761 469
- EP-A- 0 802 063
- US-A- 5 431 722
- US-A- 5 607 987
- US-A- 5 626 655
- US-A- 5 729 266

## Beschreibung

Die Erfindung betrifft ein Inkjet-System mit verbesserten Eigenschaften.

Das Inkjet-Verfahren ist bekannt (siehe beispielsweise das Kapitel Ink Jet Printing von R.W. Kenyon in "Chemistry and Technology of Printing and Imaging Systems", Herausgeber Peter Gregory, Blackie Academic & Professional, Chapman & Hall 1996, Seiten 113 bis 138, und die darin zitierte Literatur).

Dabei werden Inkjet-Bilder durch Aufspritzen einer Farbstofflösung oder Farbstoffdispersion in einem feinen bildmäßig modulierten Strahl auf ein Aufzeichnungsmaterial erzeugt. Aufzeichnungsmaterialien besserer Qualität weisen auf einem Trägermaterial eine Bildempfangsschicht auf, die ein Mittel enthält, mir der der Inkjet-Farbstoff diffusions- und wischfest gebunden werden soll. Solchen Materalien können laut EP 673 784 A verschiedene heterocyclische Verbindungen enthalten. Aus US 5,431,722 sind Inkjet-Tinten bekannt, die Amine mit sauren Gruppen enthalten und so einen gleichmäßigen pH-Wert aufweisen und EP 802 063 (nicht vorveröffentlicht) offenbart Reaktionslösungen für ein Inkjet-System, die amine, insbesondere Dimethylamine enthalten.
Aus US5,729,266 sind Aufzeichnungsmaterialien bekannt, die eine Morpholinverbindung enthalten um die Trocknengeschwindighkeit zu verbessern. Aus US 5,626,655 sind Inkjet-Tinten bekannt, die 2-[N-morpholino]-ethanesulfonic saures Salz enthalten für pH-Puffer.

Weiterhin ist es erforderlich, die Inkjet-Farbstoffe mit Lichtschutzmitteln zu schützen. Dazu sind schon verschiedene Stoffklassen vorgeschlagen worden, z.B. wasserlösliche Dialkoxybenzolderivate (EP 373 573), wasserunlösliche Phenole, Bisphenole, Hydrochinone und Hydrochinondiether (GB 2 088 777), wasserlösliche Phenole und Bisphenole (DE 43 37 862). Aminophenolether mit cyclischem, aliphatischem Aminsubstituenten und aliphatischen Heterocyclen, die gleichzeitig ein Stickstoff- und ein Schwefelatom enthalten (EP 273 712), sind dagegen nur als hydrophobe, emulgierbare Verbindungen für den Einsatz in farbfotografischem Material beschrieben.

Die bisher verwendeten Lichtschutzmittel sind in ihrer Wirkung bei Inkjet-Drucken nicht ausreichend.

Aufgabe der Erfindung war daher die Verbesserung des Lichtschutzes von Inkjet-Farbstoffen. Diese Aufgabe wird durch den Einsatz bestimmter Verbindungen gelöst.

Gegenstand der Erfindung ist daher ein Inkjet-Druckverfahren wobei das Verfahren folgende Schritt umfasst:
zur verfügung stellen einer Inkjet-Material dadurch gekennzeichnet, daß das Material wenigstens eine wasserlösliche Verbindung der allgemeinen Formeln (I), (II-A) oder (II-B) enthält: 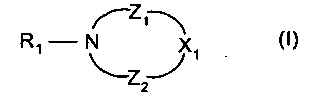 worin
- R₁: H, Alkyl, Aryl, Alkoxy, Aryloxy oder Hydroxy,
- Z₁: C₁-C₅-Alkylen,
- Z₂: C₁-C₅-Alkylen oder -Z₅-X₄-Z₆-,
- Z₅: C₁-C₄-Alkylen,
- Z₆: eine Einfachbindung, Methylen oder Ethylen,
- X₁,: 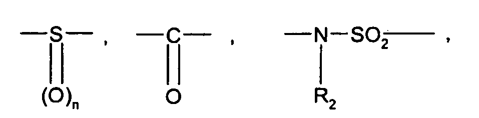 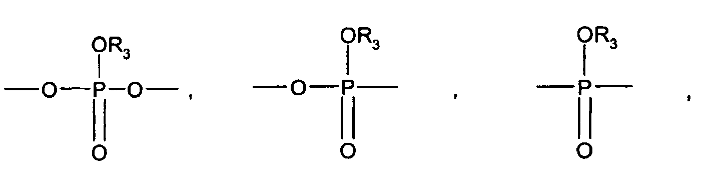 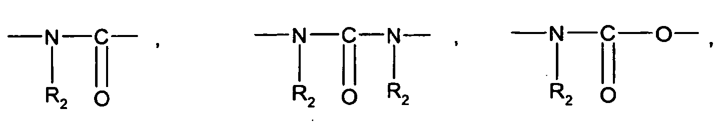 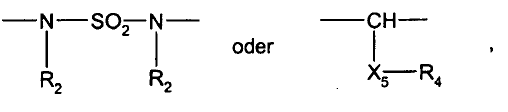
- X₄: X₁ oder -O- bedeuten
- X₅: ―O― oder 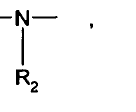
- R₂: H oder Alkyl,
- R₃: H, Alkyl oder Aryl
- R₄: Acyl und
- n: 0, 1 oder 2 bedeuten; 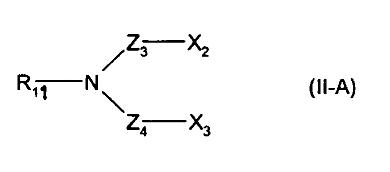
worin
- R₁₁: H, substituiertes Alkyl, Aryl, Alkoxy, oder Aryloxy,
- Z₃, Z₄: C₁-C₆-Alkylen,
- X₂: Acyl, Acyloxy, Acylamino, Carboxy, Sulfo, Rest einer Phosphorsäure, Alkoxy, Hydroxy oder Alkyl,
- X₃: H oder X₂ bedeuten; oder 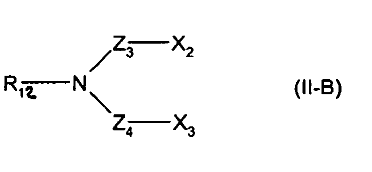
worin
- R₁₂: unsubstituiertes Alkyl,
- Z₃, Z₄: C₁-C₆-Alkylen,
X₂, X₃ Acyl, Acyloxy, Acylamino, Carboxy, Sulfo, Rest einer Phosphorsäure, Alkoxy, Hydroxy oder Alkyl bedeuten,
wobei die Verbindungen mit einer Säuregruppe auch als Salz vorliegen können, der Heterocyclus von Formel (I) 5 bis 8 Ringatome hat und die Verbindungen der Formeln (I) und (II) [(II-A) oder (II-B)] eine Löslichkeit in Wasser von wenigstens 1 g/l bei 20°C und Normaldruck besitzen.

Alkyl- und Alkylengruppen können geradkettig oder verzweigt, substituiert oder unsubstituiert sein, wobei als Substituenten Sulfo, Carboxy, Hydroxy, Halogen, Nitro, Cyano, Acyl, Acyloxy, Acylamino, Alkoxy und Aryloxy in Betracht kommen. Acylreste können von aliphatischen, olefinischen oder aromatischen Carbon-, Kohlen-, Carbamin-, Sulfon-, Amidosulfon-, Phosphor- oder Phosphonsäuren abstammen.
- R₁: ist insbesondere Alkyl oder Aryl; X₁, X₄ sind insbesondere 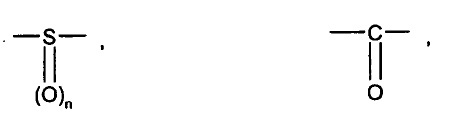 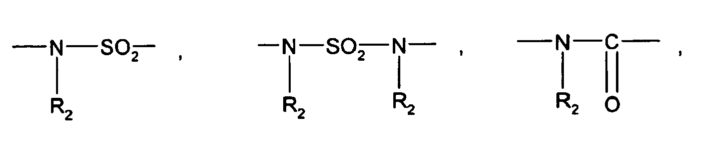 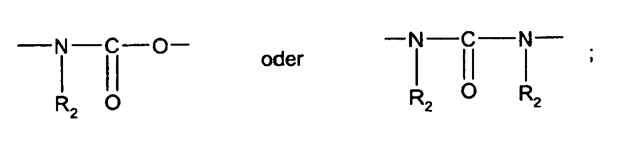
- R₂: ist insbesondere H;
- X₂: ist insbesondere Acyl, Acyloxy, Acylamino, Carboxy, Sulfo, Hydroxy, Alkoxy, -(OC₂H₄)ₘOR₅ oder -(OC₃H₆)ₚ-OR₅, wobei R₅ H oder C₁-C₄₋Alkyl, m und p eine ganze Zahl 1 bis 12 bedeuten.

In einer besonders bevorzugten Ausführungsform enthält wenigstens entweder das Material oder die wenigstens eine Farbtinte wenigstens eine wasserlösliche Verbindung der allgemeinen Formeln (III) oder (IV): 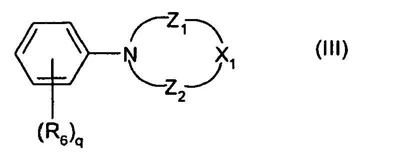 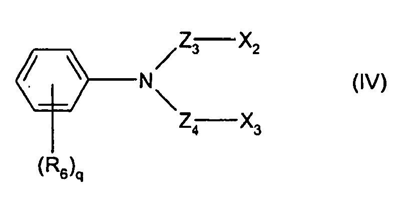 worin
- Z₁, Z₂, Z₃, Z₄, X₁, X₂, X₃: die vorstehend für (I-A) bzw. (II-A) genannte Bedeutung besitzen,
- R₆: Alkyl, Alkoxy, Acyl, Acyloxy, Acylamino, Sulfo, Carboxy oder Hydroxy und
- q: eine ganze Zahl 1 bis 5 bedeuten.

Z₁ und Z₂ haben in Formel (III) zusammen vorzugsweise 2 bis 4 Atome. X₁ in Formel (III) ist ganz besonders bevorzugt -SO-, -SO₂-, -CO-, -N(R₂)SO₂-, -O-oder -N(R₂)SO₂N(R₂)- . X₂ in Formel (III) ist ganz besonders bevorzugt Acyl, Carboxy, Sulfo, Hydroxy, -OR₅ oder -(OC₂H₄)ₘ-OR₅.

Wenigstens ein Rest R₆ in den Formeln (III) und (IV) ist bevorzugt Alkoxy in o- oder p-Stellung.

Die Löslichkeit der Verbindungen der Formeln (I) bis (IV) beträgt mindestens 1 g/l, bevorzugt wenigstens 10 g/l Wasser bei 20°C und Normaldruck.

Die Verbindungen der Formel (I) bis (IV) können eine polymerisierbare Gruppe oder eine funktionelle Gruppe enthalten, die zu einer Verknüpfung mit einem Polymeren nach üblichen polymeranalogen Reaktionen fähig ist. Verbindungen der Formeln (I) bis (IV) mit polymerisierbarer Gruppe können Homo- oder Copolymere bilden oder zur Bildung von Pfropfpolymeren eingesetzt werden.

Die polymeren Verbindungen weisen eine Löslichkeit in Wasser von wenigstens 1 g/l, vorzugsweise 10 g/l bei 20°C und Normaldruck auf.

Geeignete Comonomere zur Herstellung wasserlöslicher Polymere mit Verbindungen der Formel (I) bis (IV) sind z.B.: Acrylate, Methacrylate, Vinylester, Maleinsäureester, Acrylamide, wie Acrylamid, Diacetonacrylamid, n-Butylacrylamid, Acryloylmorpholin, Acrylamido-2-methylpropansulfonat und Vinylpyrrolidon, Methacrylamide, wie t-Butylmethacrylamid und 2-Methoxymethacrylamid, Acrylsäure, Methacrylsäure, Maleinsäure, Fumarsäure, Vinylether, wie Methoxyvinylether, Styrol, Styrolsulfonsäure, Ketone, wie Methylvinylketon, heterocyclische Verbindungen wie Vinylpyridin.

Polymere, die zu polymeren Umsetzungen geeignet sind oder Pfropfpolymere bilden sind z.B. Polyacrylsäure, Polymethacrylsäuren als Homo- oder Copolymere; Polyvinylalkohol und Vinylalkoholcopolymere, Cellulose und Cellulosederivate, Gelatine, acrylierte Gelatine, epoxygruppenhaltige Polymere und halogenierte Polystyrolcopolymere.

Beispiele für Verbindungen der Formeln (I) bis (IV) sind: 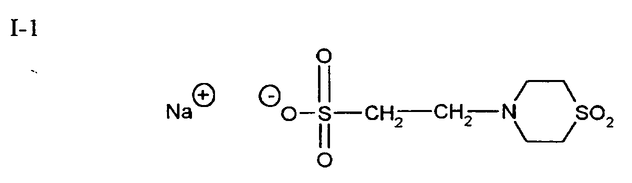 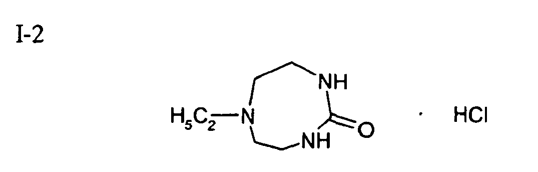 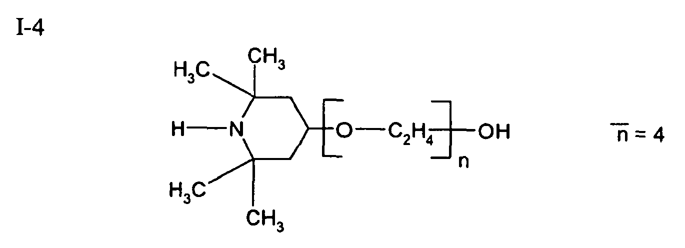 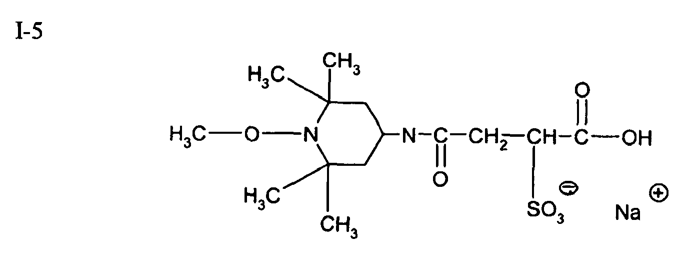 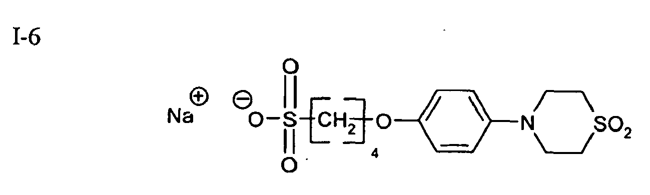 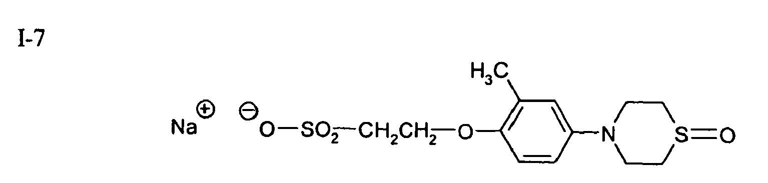 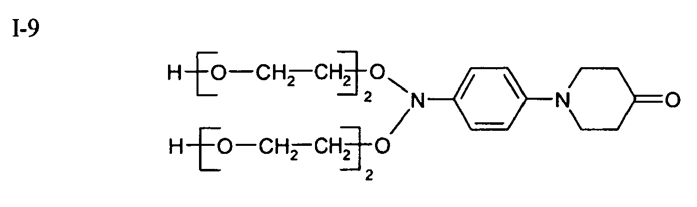 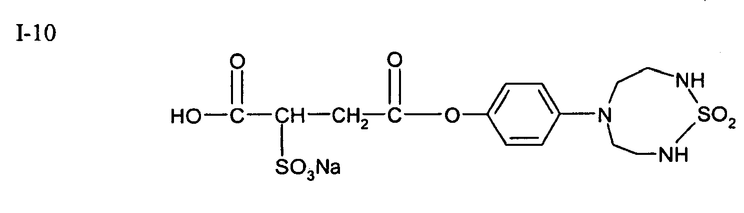 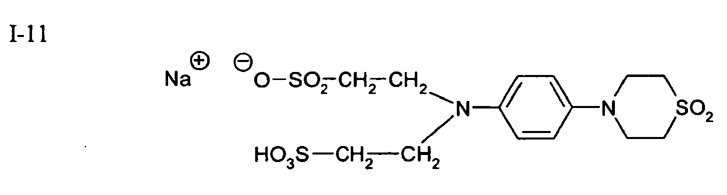 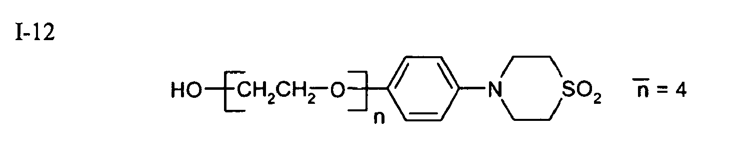 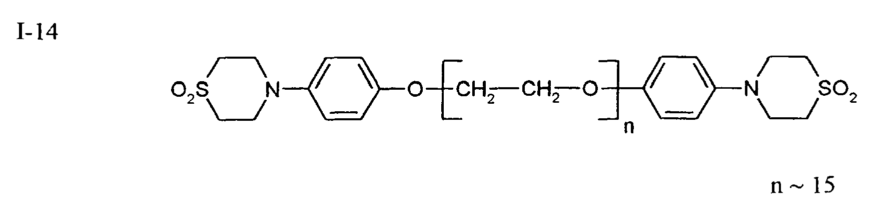 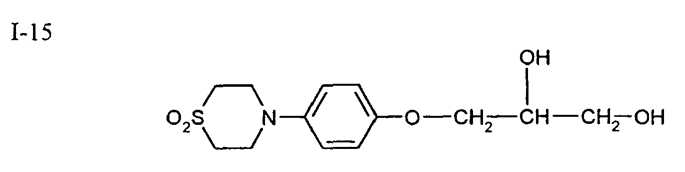 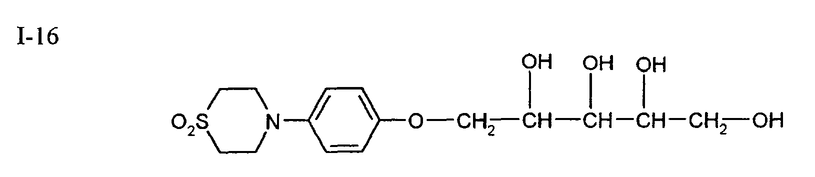 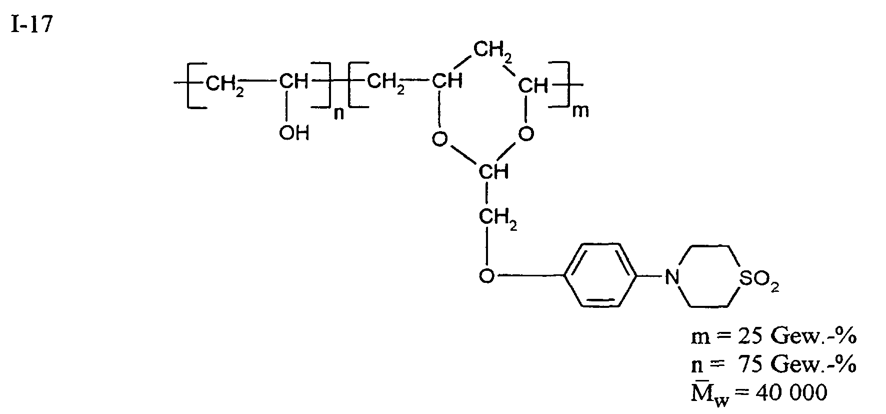 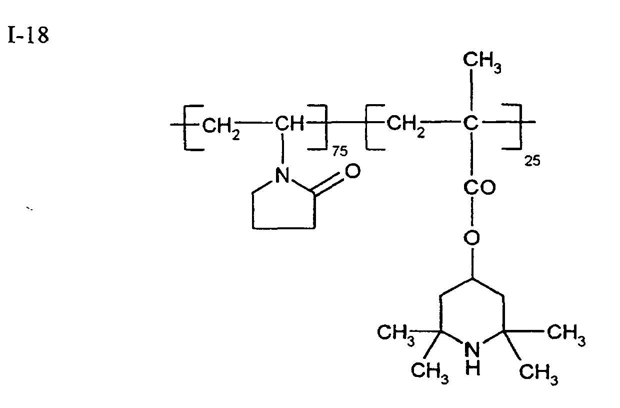 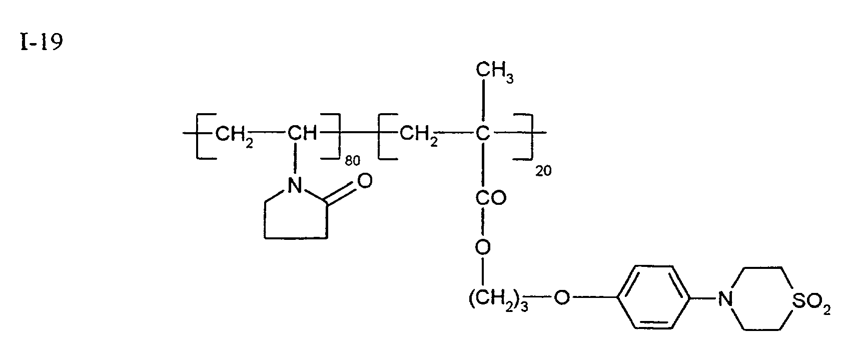 I-20 Copolymerisat aus acrylierter Gelatine (M_{w} ~ 3 000) (75 Gew.-%) und

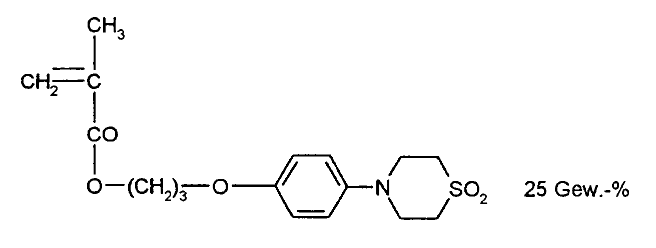

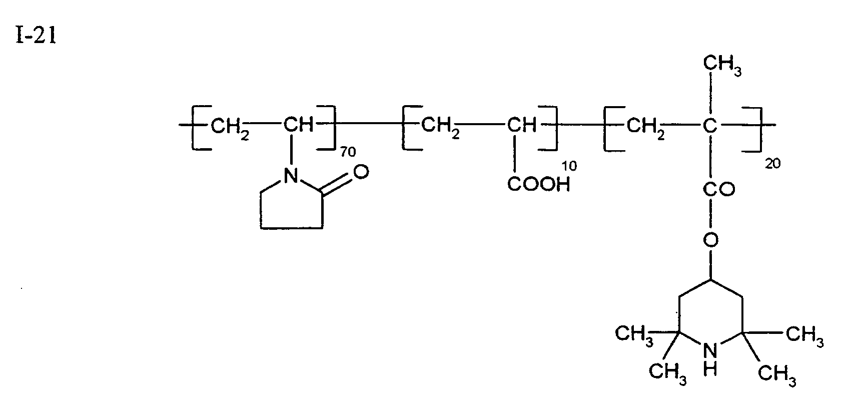

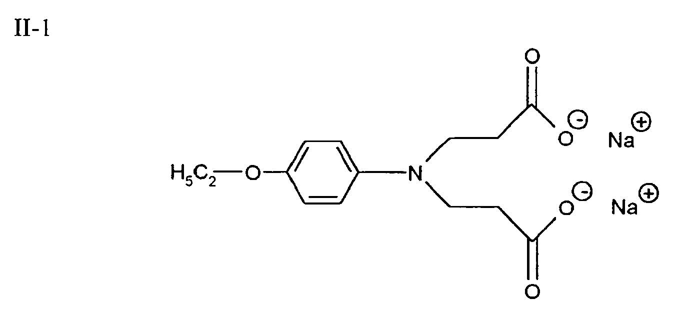

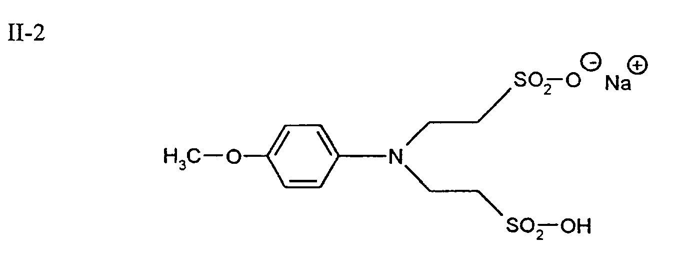

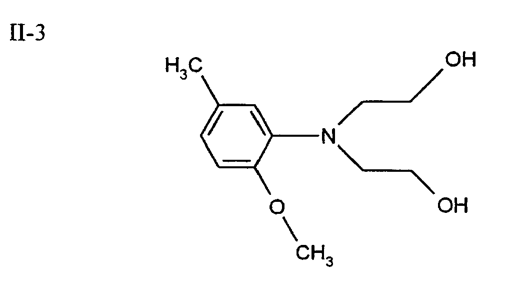

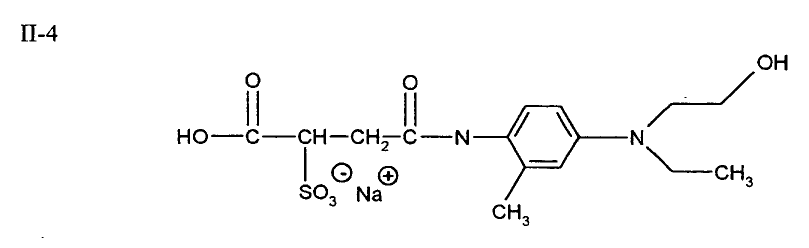

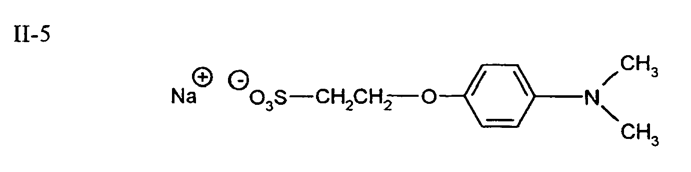

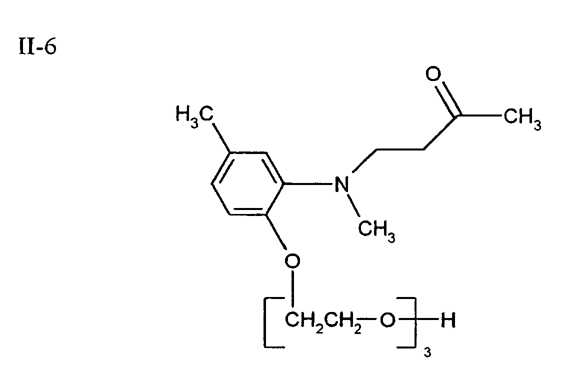

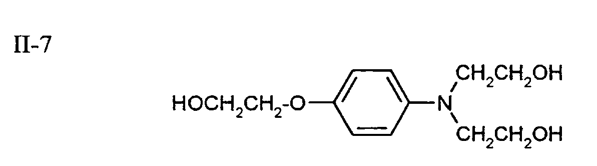

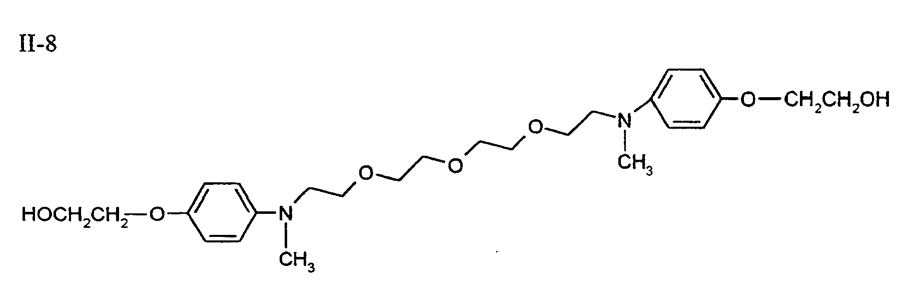

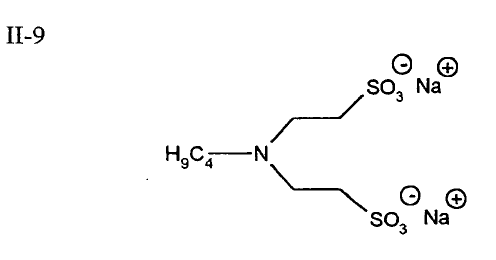

Die Löslichkeiten aller aufgeführten Verbindungen in Wasser bei 20°C und Normaldruck liegen oberhalb von 10 g/l.

Die Verbindungen der Formeln (I) bis (IV) werden entweder im Inkjet-Material oder in wenigstens einer Inkjet-Tinte oder in beiden eingesetzt. Der Einsatz im Material ist bevorzugt. Die Einsatzmenge beträgt insgesamt 10 bis 5 000 mg/m², bevorzugt 50 bis 2 000 mg/m². Sie werden entweder Gieß- oder Streichdispersionen zugefügt, die auf den Träger des Inkjet-Materials nach üblichen Techniken aufgetragen werden oder man läßt sie aus einer wäßrigen Lösung auf das Material aufziehen. Enthält das Material mehrere Schichten, können die Verbindungen der Formeln (I) bis (IV) in eine Schicht gegeben oder auf mehrere Schichten verteilt werden, wobei sie in mehreren Schichten in gleicher oder unterschiedlicher Konzentration eingebracht werden können.

Werden die Verbindungen der Formeln (I) bis (IV) in Inkjet-Tinten gegeben, so soll pro m² über die Tinte eine Menge auf das Material aufgebracht werden, die in den zuvor genannten Bereich fällt. In der Tinte selbst ist eine Konzentration von 1 bis 200 g/l, insbesondere 5 bis 100 g/l bevorzugt.

Geeignete Inkjet-Tinten werden in EP 672 538, S. 3 bis 6 beschrieben.

In einer weiteren bevorzugten Ausführungsform enthält wenigstens eine Schicht ein Mittel, das Inkjet-Farbstoffe diffusions- und wischfest bindet.

Geeignete Mittel hierfür sind z.B. kationische Beizen, farbstoffkomplexierende Verbindungen, Aluminiumhydroxid.

Kationische Beizen sind bevorzugt, weil als Inkjet-Farbstoffe üblicherweise Azofarbstoffe mit sauren Gruppen verwendet werden.

Geeignete kationische Beizen sind z.B. Verbindungen aus den Klassen der Polyvinylpyridine, gegebenenfalls quaterniert, der Polyvinylimidazole, gegebenenfalls quaterniert, der Poly(-di-)allylammoniumverbindungen, der Polydialkylaminoalkyl-(meth-)acrylate, gegebenenfalls quaterniert, der Polydialkylammoniumalkyl(meth-) acrylamide, gegebenenfalls quaterniert, der Polyvinylbenzyldi- oder trialkylammoniumverbindungen, der Polyester mit quartären Ammoniumgruppen, der Polyamide mit quartären Ammoniumgruppen, der Polyurethane mit quartären Ammoniumgruppen, der Polymere aus N,N,N-Trialkyl-N-(meth-)acrylamidobenzylammonium-verbindungen. Bevorzugte Beizen sind Copolymerisate aus wenigstens 45 Gew.-% Vinylpyrrolidon und wenigstens 20 Gew.-% eines Monomeren mit quartärem Stickstoffatom.

Die kationischen Beizen können wasserlöslich oder wasserdispergierbar sein. Die kationischen Beizen haben ein mittleres Molekulargewicht (Gewichtsmittel) von vorzugsweise wenigstens 2000, insbesondere wenigstens 20.000.

Als Beizen können auch Phosphoniumgruppen enthaltende Verbindungen (EP 609 930) eingesetzt werden, sowie gemahlene kationische Ionenaustauscherharze, die feinverteilt in die Beizschicht eingebracht werden.

Nachfolgend sind einige Beispiele dargestellt.

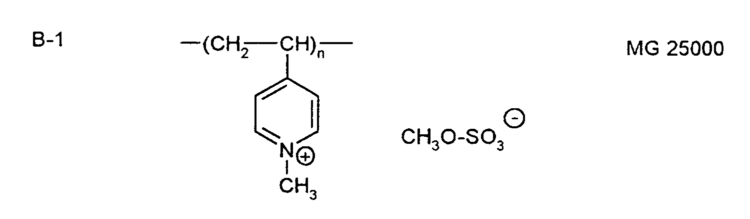

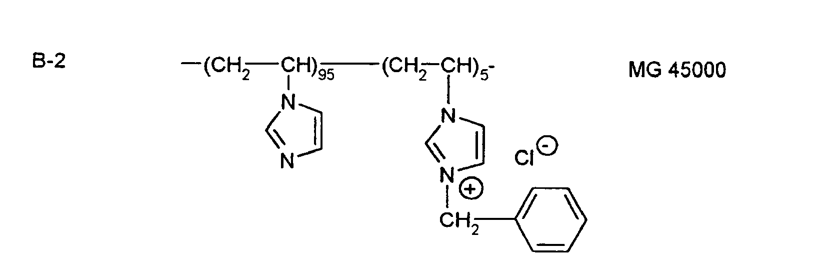

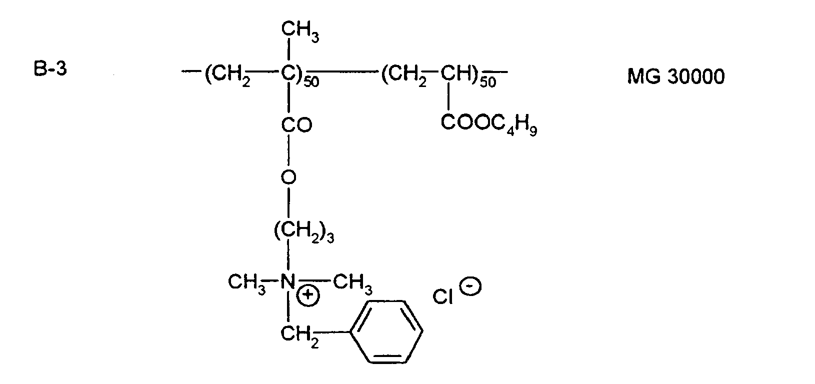

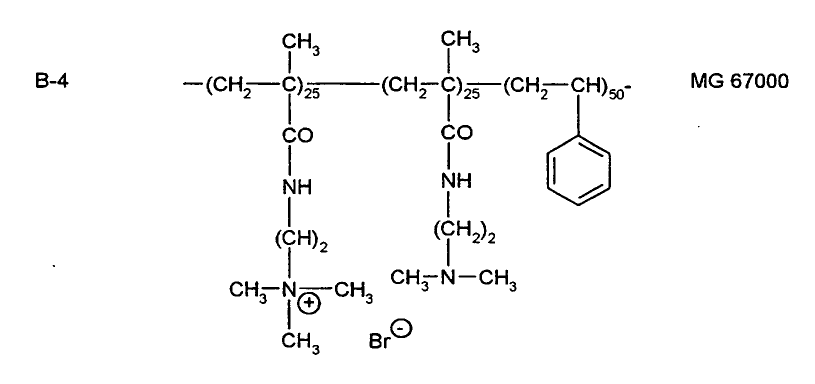

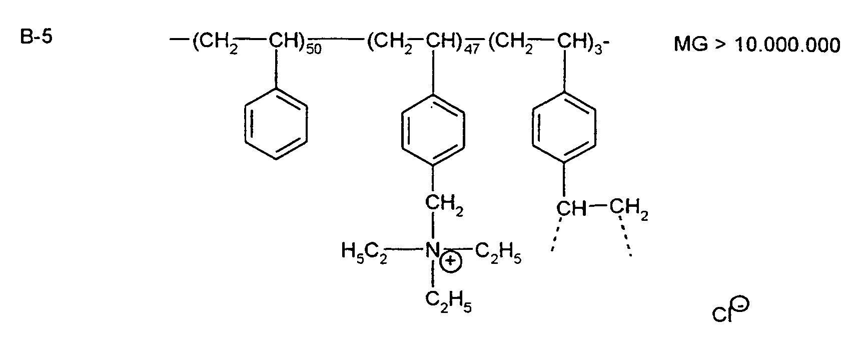

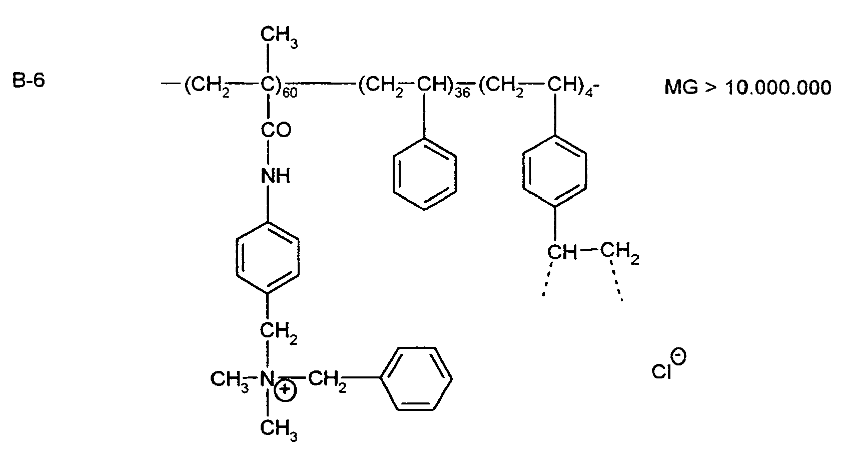

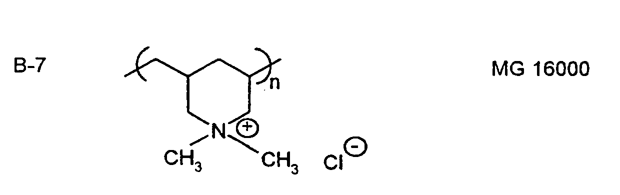

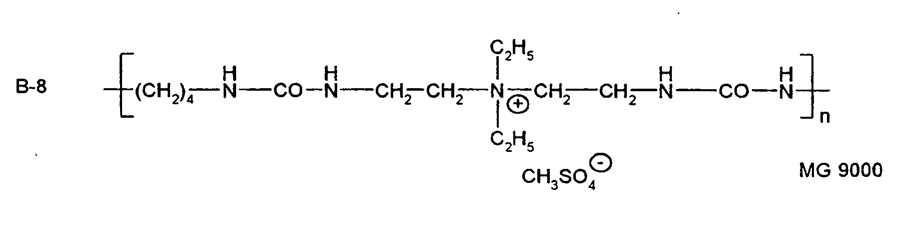

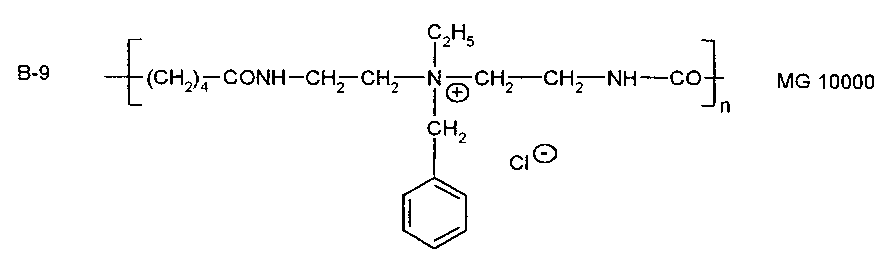

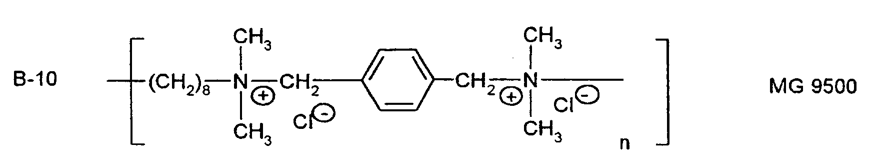

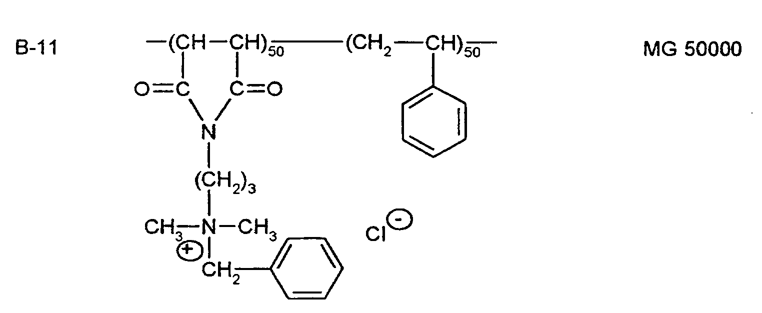

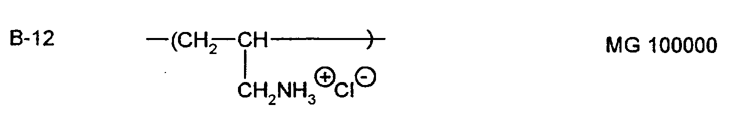

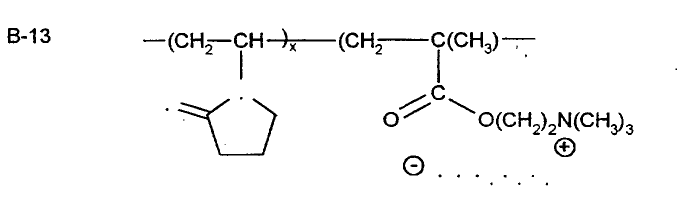

### M_{w} = 1.000.000; x = 70 Gew.-%; y = 30 Gew.-%

Die gepunkteten Bindungen in B-5 und B-6 stehen für eine Vernetzung des Moleküls mit weiteren gleichartigen Ketten.

Die Mittel, die die Inkjet-Farbstoffe diffusions- und wischfest binden, werden in einer Menge von 10 bis 3 000 mg/m² Inkjet-Material, vorzugsweise 50 bis 1 000 mg/m² eingesetzt.

Geeignete Bindemittel für die aufgetragenen Schichten sind z.B. Gelatine und Gelatinederivate, Polyvinylpyrrolidon, Polyvinylalkohol, Cellulose und Cellulosederivate, Albumin, Casein, Stärke und Stärkederivate, Na-Alginat, Polyethylenimin, Polyvinylpyridiniumhalogenid und wasserlösliche Polyurethane und Polyester. Die Bindemittel sollen härtbar sein.

Gelatine oder Abmischungen von Gelatine mit z.B. Gelatinederivaten wie Phthaloylgelatine, Cellulosederivaten wie Hydroxyethylcellulose oder Polyvinylpyrrolidon sind bevorzugt.

Weiterhin kann das Inkjet-Aufzeichnungsmaterial Abstandshalter, UV-Absorber, Farbstoffstabilisatoren, optische Aufheller, Netzmittel, Emulgatoren und Biozide enthalten.

Geeignete Abstandhalter sind insbesondere kugelförmig, haben einen mittleren Durchmesser von 1 bis 50 µm, insbesondere von 5 bis 20 µm und besitzen eine enge Korngrößenverteilung.

Geeignete Abstandhalter bestehen z:B. aus Polymethylmethacrylat, Polystyrol, Polyvinyltoluol, Siliciumdioxid und unlöslicher Stärke.

Der Träger hat vorzugsweise eine Stärke von 80 bis 250 µm, im Falle von polyester- oder polyolefinlaminiertem Papier hat das Papier insbesondere eine Stärke von 80 bis 220 µm, die Polyester bzw. die Polyolefinschichten insbesondere eine Stärke von jeweils 5 bis 30 µm. Polyethylen ist als Polyolefin, Polyethylenterephthalat als Polyester bevorzugt.

Zur Verhinderung der Krümmung des Inkjet-Aufzeichnungsmaterials kann der Träger auf der der Empfangsschicht gegenüberliegenden Seite ebenfalls mit wenigstens einer Bindemittelschicht beschichtet sein. Vorzugsweise handelt es sich dabei um das gleiche Bindemittel bzw. Bindemittelgemisch wie auf der Empfangsseite.

Geeignete UV-Absorber sind in Research Disclosure 24239 (1984), 37254, Teil 8 (1995), S. 292, 37038, Teil X (1995), S. 85 und 38957, Teil VI (1996), S.607 sowie EP 306 083 und 711 804 beschrieben. Diese Verbindungen werden vorzugsweise in der bzw. den am weitesten vom Träger entfernten Schichten eingebracht.

Besonders bevorzugt befinden sich die UV-Absorber in einer Schicht oberhalb der oder den Schichten, die die Verbindungen der Formeln (I) bei (IV) enthalten.

Die UV-Absorber können wasserlöslich oder wasserunlöslich sein. Letztere werden mit geeigneten Dispersionshilfsmitteln als Feststoffe dispergiert eingesetzt oder sie werden gegebenenfalls zusammen mit hochsiedenden Lösungsmitteln mit Hilfe geeigneter Emulgatoren emulgiert eingesetzt.

Beispiele für geeignete UV-Absorber sind:

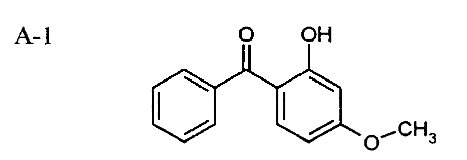

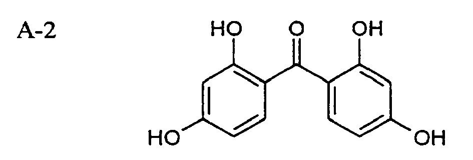

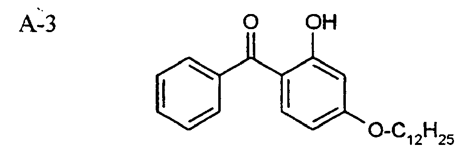

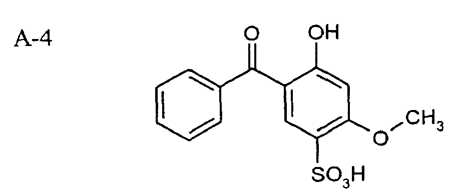

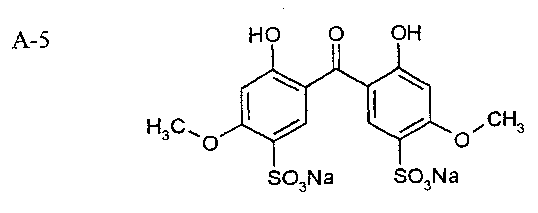

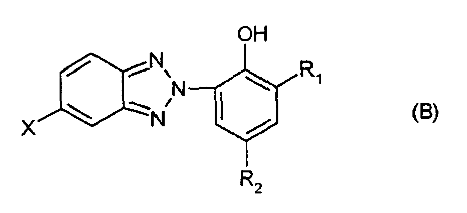

| | | | |
|---|---|---|---|
| B-1 | R₁ = s-C₄H₉ | R₂ = t-C₄H₉ | X = H |
| B-2 | R₁= R₂ = t-C₄H₉ | | X = Cl |
| B-3 | R₁= R₂ = t-C₅H₁₁ | | X = H |
| B-4 | R₁= H | R₂ = t-C₈H₁₇ | X = H |
| B-5 | R₁= t-C₁₂H₂₅ | R₂ = CH₃ | X = H (Isomerengemisch) |
| B-6 | R₁= t-C₄H₉ | R₂ = -CH₂CH₂-CO₂-C₈H₁₇ | X = Cl |

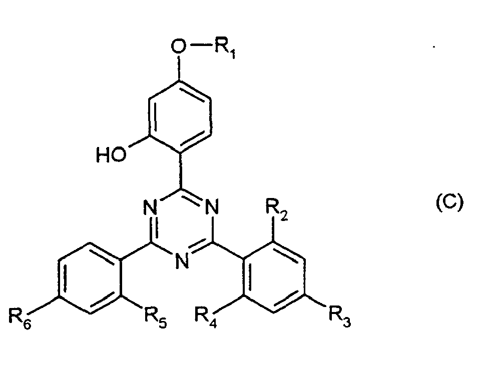

| | |
|---|---|
| C-1 | R₁ = C₈H₁₇, R₂ = R₃ = R₅ = R₆ = CH₃, R₄ = H |
| C-2 | R₁ = C₆H₁₃, R₂ - R₆ = H |
| C-3 | 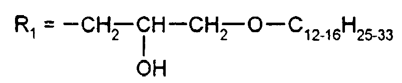 (Gemisch) R₂=R₃=R₄=R₅=R₆=H |
| C-4 | 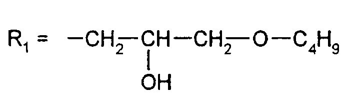 |
| | R₂ = R₃ = R₄ = CH₃, R₅ = OH, |
| | R₆ = -O-R₁ |
| C-5 | 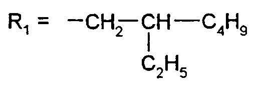 |
| | R₂ = R₃ = R₄ = H, R₅ = OH, R₆ = -O-R₁ |
| C-6 | 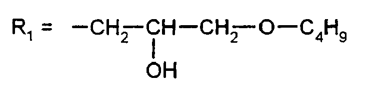 |
| | R₂ = R₅ = OH, R₃ = R₆ = -O-R₁, R₄ = H |
| C-7 | R₁ = C₁₃H₂₇-i, R₂ = R₅ =OH, R₃=R₆= -O-R₁, R₄ = H (Isomerengemisch) |

Geeignete hochsiedende Lösungsmittel sind Res. Discl. 37 254, Teil 6 (1995), S. 292 beschrieben.

Weitere geeignete Bildstabilisatoren sind aus Research Disclosure 37254, Teil 8 (1995), S. 292 und 38957, Teil X (1996), S.621 ff. sowie DE 43 37 862, EP 373 573, GB 2 088 777, EP 685 345 und EP 704 316 bekannt.

Geeignete optische Aufheller sind in Research Disclosure 37 254, Teil 8 (1995), S. 292 ff und 38 957, Teil VI. (1996), S. 607 ff beschrieben. Diese Mittel werden vorzugsweise in einer Schicht unterhalb der am weitesten vom Träger entfernten Schicht, besonders bevorzugt in einer Schicht unterhalb der Empfangsschicht oder in der Unterlage eingebracht.

Die Bindemittel in den einzelnen Schichten, insbesondere Gelatine, können auch durch geeignete Verbindungen, sogenannte Härtungsmittel, vernetzt werden, um die Wasserfestigkeit und Kratzfestigkeit der Schichten zu verbessern.

Geeignete Härtungsmittel sind in Research Disclosure 37 254, Teil 9 (1995), S. 294; 37 038 Teil XII (1995), S. 86 und 38 957, Teil II B (1996), S. 599 ff beschrieben.

Beispiele für Härter sind:

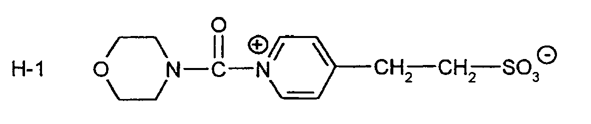

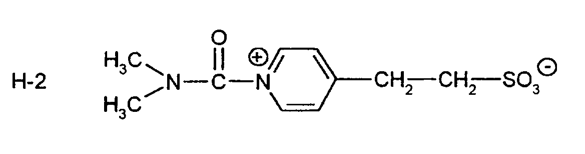

H-3 H₂C=CH-CH₂-SO₂-CH₂-CH=CH₂

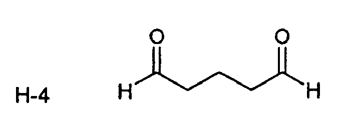

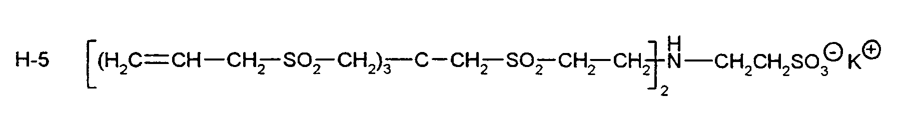

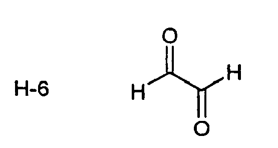

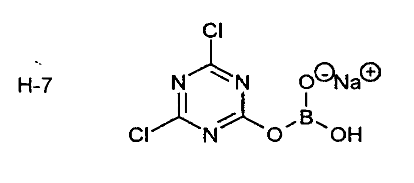

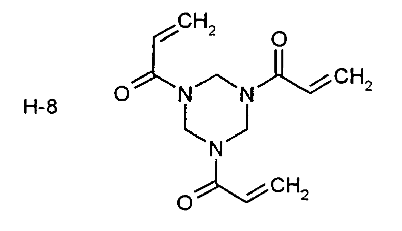

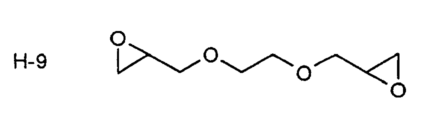

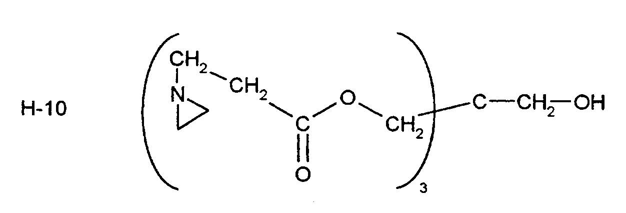

Es werden üblicherweise 0,005 bis 10 Gew.-%, bezogen auf das härtbare Bindemittel, eingesetzt, vorzugsweise 0,01 bis 1 Gew.-%.

Das Material kann mittels eines Kaskaden- oder Vorhanggießers, wie er aus der Herstellung fotografischer Silberhalogenidmaterialien bekannt ist, ausgehend vom Trägermaterial und je einer Gießlösung für jede aufzubringende Schicht in einem Durchgang hergestellt werden.

Nach dem Beguß des Trägers mit der oder den Gießlösungen wird das Material getrocknet und ist dann gebrauchsfertig.

Die einzelnen Schichten haben eine Trockenschichtdicke von 0,1 bis 20 µm, vorzugsweise von 0,5 bis 5 µm.

### Beispiele

### Beispiel 1

### Probe 1A

Beidseitig polyethylenbeschichtetes Papier (180 g/m²) wird derart mit einer Gießlösung beschichtet, daß der Trockenauftrag 10 g/m² beträgt. Die Gießlösung ist wie folgt zusammengesetzt:

| | |
|---|---|
| 6,59 g | Poly[1,4-cyclohexylendimethylen-co-p-xylylen(40/60)-terephthalat-comalonat-co-3,3'-natriumiminobis(sulfonylbenzoat)] M_{w} ~ 10 000 |
| 2,83 g | Polyvinylpyrolidon, M_{w} ~ 630 000 |
| 0,20 g | Polyethylenoxid, M_{w} ~ 6 000 |
| 0,20 g | Polyvinylalkohol, M_{w} ~ 49 000 |
| 0,17 g | Propylenglykolbutylether |
| 0,07 g | Poly[methylmethacrylat-co-divinylbenzol)-Teilchen )mittlerer Durchmesser: 15 µm) |
| 90,00 g | Wasser |

Mₙ ist das Molekulargewicht (Zahlenmittel); M_{w} das Molekulargewicht (Gewichtsmittel).

### Proben 1B bis 1G

Die Proben 1B bis 1G werden hergestellt wie Probe 1A mit dem Unterschied, daß in der Gießlösung 0,5 g Wasser durch die in Tabelle 1 angegebenen Verbindungen ersetzt wurde.

Anschließend wurden die Proben mit einem Inkjet-Drucker (HP 560, Hewlett Packard) derart bedruckt, daß man jeweils ein 1 cm²-großes Feld mit maximalem Auftrag an Purpur-, Blaugrün- bzw. Gelbtinte erhält. Es wird die optische Dichte der Farbfelder gemessen, mit dem Licht einer auf Tageslicht normierten Xenonlampe bestrahlt (5·10⁶ lux·h) und dann der prozentuale Rückgang der Dichten ermittelt (Tabelle 1).

Als Vergleichsverbindungen wurden eingesetzt:

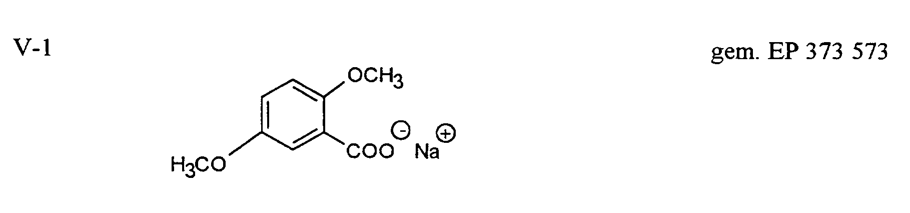

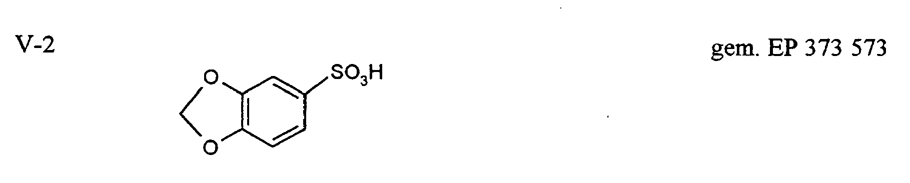

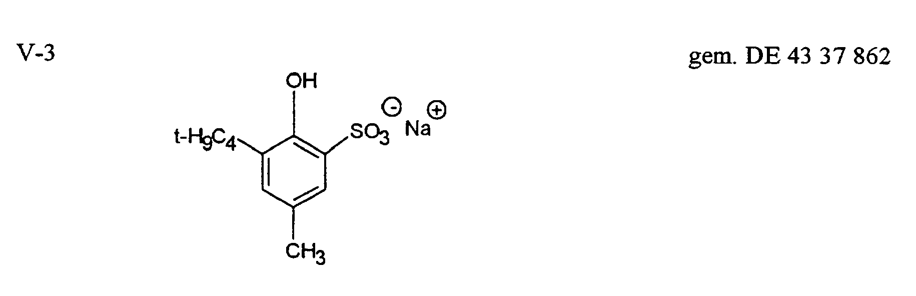

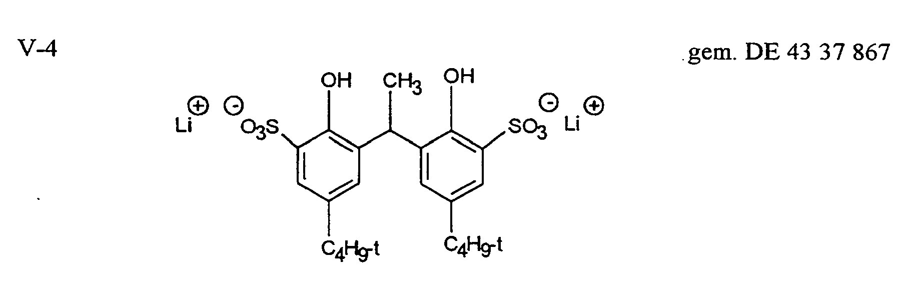

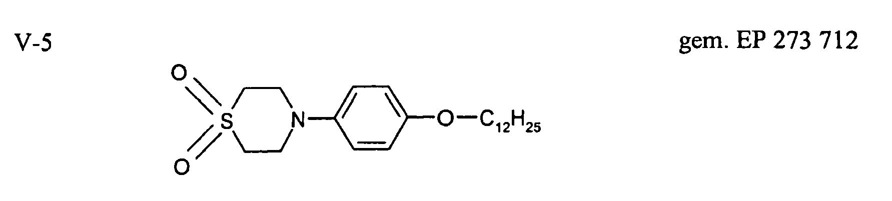

**Tabelle 1 (V=Vergleich; E=erfindungsgemäß)**

| | | prozentualer Dichterückgang | | |
|---|---|---|---|---|
| Probe | Verbindung | gelb | purpur | blaugrün |
| 1A(V) | - | -57 | -78 | -90 |
| 1B(V) | V-1 | -51 | -69 | -82 |
| 1C(V) | V-3 | -52 | -72 | -85 |
| 1E(E) | I-12 | -30 | -41 | -54 |
| 1F(E) | II-3 | -41 | -58 | -70 |
| 1G(E) | II-7 | -38 | -54 | -66 |

Wie Tabelle 1 zeigt, sind die erfindungsgemäßen Lichtschutzmittel deutlich wirksamer als die Vergleichsverbindungen V-1 und V-3.

### Beispiel 2

### Probe 2A

Ein Aufzeichnungsmaterial für Inkjet-Druck wird hergestellt, indem auf einen Träger aus beidseitig mit Polyethylen beschichtetem Papier (200 g/m²) eine Schicht mit folgender Zusammensetzung aufgebracht wird (alle Mengenangaben beziehen sich auf 1 m²):

| | |
|---|---|
| 9,50 g | Gelatine |
| 0,25 g | Beize B-1 |
| 0,10 g | Abstandshalter AH-1 |
| 0,10 g | Härtungsmittel H-1 |

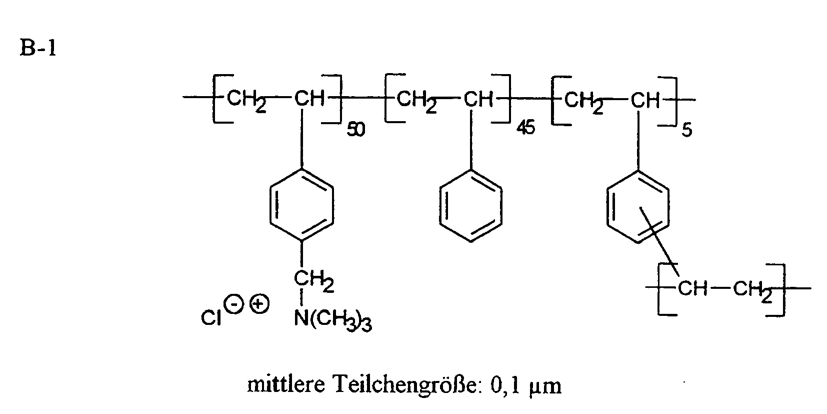

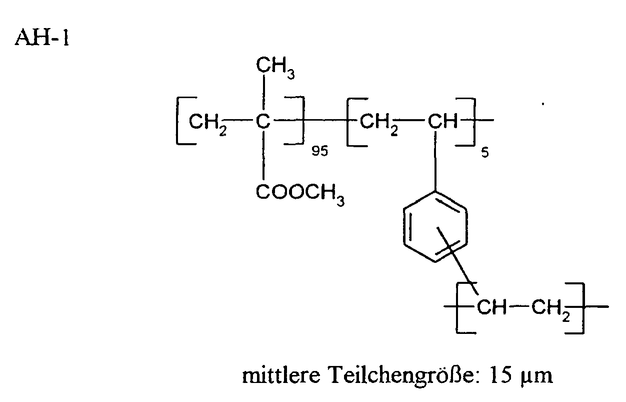

### Probe 2B

Die Probe 2B wird hergestellt wie Probe 2A mit dem Unterschied, daß der Schicht 1 g/m² der Vergleichsverbindung V-5 in emulgierter Form (hochsiedendes Lösungsmittel: Trikresylphosphat (1 g/m²), Netzmittel:Diisobutylnaphthalindisulfonsäuredinatriumsalz) zugesetzt wird.

### Proben 2C bis 2I

Die Proben 2C bis 2I werden hergestellt wie Probe 2A mit dem Unterschied, daß der Schicht 1 g/m² der in Tabelle 2 angegebenen Verbindungen zugesetzt wird.

Anschließend werden alle Proben mit einem Inkjet-Drucker (HP 850, Hewlett Packard) derart bedruckt, daß man jeweils ein 1 cm²-großes Feld mit maximalem Auftrag an Gelb-, Purpur- bzw. Blaugrün-Tinte erhält. Es wird die optische Dichte der Farbfelder gemessen, mit dem Licht einer für Tageslicht normierten Xenonlampe bestrahlt (10·10⁶ lux·h) und dann der prozentuale Dichterückgang ermittelt (Tabelle 2).

**Tabelle 2 (V=Vergleich; E=erfindungsgemäß)**

| | | prozentualer Dichterückgang | | |
|---|---|---|---|---|
| Probe | Verbindung | gelb | purpur | blaugrün |
| 2A(V) | - | -80 | -39 | -42 |
| 2B(V) | V-5 | -81 | -39 | -41 |
| 2C(V) | V-2 | -70 | -33 | -37 |
| 2D(V) | V-4 | -66 | -34 | -35 |
| 2E(E) | I-6 | -41 | -22 | -25 |
| 2F(E) | I-9 | -49 | -25 | -28 |
| 2G(E) | I-17 | -44 | -24 | -26 |
| 2H(E) | II-2 | -52 | -27 | -29 |
| 2I(E) | II-5 | -58 | -30 | -31 |

Wie Tabelle 2 zeigt sind die erfindungsgemäßen Verbindungen wesentlich besser als Lichtschutzmittel geeignet als die Vergleichsverbindungen.

### Beispiel 3

### Probe 3A

Ein Aufzeichnungsmaterial für Inkjet-Druck wird hergestellt, in dem auf einen Träger aus beidseitig mit Polyethylen beschichteten Papier (180 g/m²) folgende Schichten aufgebracht werden (Mengenangaben pro 1 m²):

| Schicht 1 | |
|---|---|
| 5,0 g | Gelatine |
| 0,25 g | Beize B-1 |
| 1,0 g | Farbstoffstabilisator (s. Tabelle 3) |

| Schicht 2 | |
|---|---|
| 1,5 g | Gelatine |
| 0,5 g | UV-Absorber (s. Tabelle 3) |
| 0,25 g | hochsiedendes Lösungsmittel (siehe Tabelle 3) |

| Schicht 3 | |
|---|---|
| 0,8 g | Gelatine |
| 0,2 g | Hydroxyethylcellulose |
| 0,2 g | Abstandshalter AH-1 |
| 0,006 g | Härtungsmittel H-4 |

### Proben 3B-3F

Die Proben 3B-3F werden hergestellt wie Probe 3A mit dem Unterschied, daß den Schichten 1 und 2 die in Tabelle 3 angegebenen Verbindungen zugesetzt werden.

Anschließend werden alle Proben mit einen Inkjet-Drucker (HP 870, Hewlett Packard) derart bedruckt, daß man jeweils ein 1 cm²-großes Feld mit maximalem Auftrag an Gelb-, Purpur- bzw. Blaugrün-Tinte erhält. Es wird die optische Dichte des Farbfeldes gemessen, mit dem Licht einer für Tageslicht normierten Xenonlampe bestrahlt (10·10⁶ lux^{h}) und dann der prozentuale Dichterückgang und der Anstieg der Gelbdichte einer unbedruckten Fläche ermittelt (Tabelle 3).

**Tabelle 3 (V: Vergleich; E: erfindungsgemäß)**

| Probe | Farbstoff-stabilisator | UV-Absorber | hochsiedendes Lösungsmittel | % | | | Gelbdichte |
|---|---|---|---|---|---|---|---|
| | | | | gb | pp | bg | |
| 3A(V) | ohne | ohne | ohne | -83 | -52 | -66 | 0,08 |
| 3B(V) | ohne | A-5 | ohne | -79 | -46 | -63 | 0,07 |
| 3C(V) | ohne | B-1 | TKP* | -77 | -45 | -62 | 0,06 |
| 3D(E) | I-6 | ohne | ohne | -52 | -31 | -39 | 0,12 |
| 3E(E) | I-6 | A-5 | ohne | -50 | -31 | -38 | 0,07 |
| 3F(E) | I-15 | B-1 | TKP* | -53 | -32 | -37 | 0,06 |

| | | | | | | | |
|---|---|---|---|---|---|---|---|
| * TPK = Trikresylphosphat | | | | | | | |

Die zusätzliche Verwendung eines UV-Absorber verhindert die bei Bestrahlung auftretende Vergilbung.

## Patentansprüche

1. Inkjet-Druckverfahren wobei das Verfahren folgende Schritt umfasst:
zur Verfügung stellen einer Inkjet-Material **dadurch gekennzeichnet, daß** das Material wenigstens eine wasserlösliche Verbindung der allgemeinen Formeln (I), (II-A) oder (II-B) enthält: 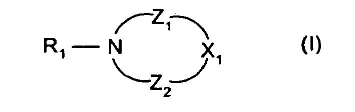
worin
R₁ H, Alkyl, Aryl, Alkoxy, Aryloxy oder Hydroxy,
Z₁ C₁-C₅-Alkylen,
Z₂ C₁-C₅-Alkylen oder -Z₅-X₄-Z₆-,
Z₅ C₁-C₄-Alkylen,
Z₆ eine Einfachbindung, Methylen oder Ethylen,
X₁ 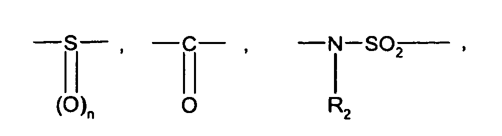 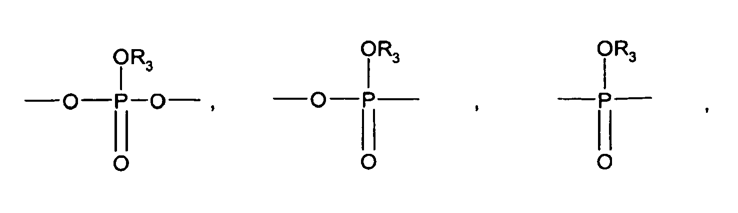 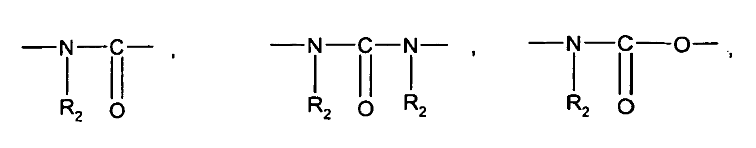 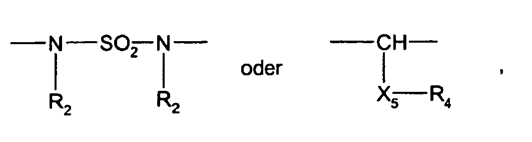
X₄ X₁ oder -O- bedeuten
X₅ ―O― oder 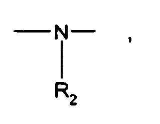
R₂ H oder Alkyl,
R₃ H, Alkyl oder Aryl
R₄ Acyl und
n 0, 1 oder 2 bedeuten 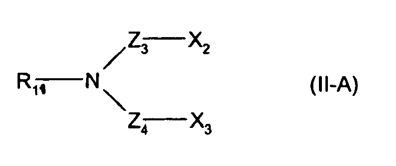 ;
worin
R₁₁ H, substituiertes Alkyl, Aryl, Alkoxy, oder Aryloxy,
Z₃, Z₄ C₁-C₆-Alkylen,
X₂ Acyl, Acyloxy, Acylamino, Carboxy, Sulfo, Rest einer Phosphorsäure, Alkoxy, Hydroxy oder Alkyl,
X₃ H oder X₂ bedeuten; oder 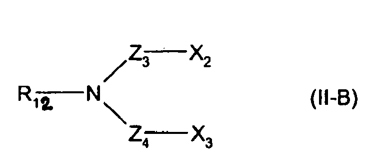
worin
R₁₂ unsubstituiertes Alkyl,
Z₃, Z₄ C₁-C₆-Alkylen,
X₂, X₃ Acyl, Acyloxy, Acylamino, Carboxy, Sulfo, Rest einer Phosphorsäure, Alkoxy, Hydroxy oder Alkyl bedeuten,
wobei die Verbindungen mit einer Säuregruppe auch als Salz vorliegen können, der Heterocyclus von Formel (I) 5 bis 8 Ringatome hat und die Verbindungen der Formeln (I) und (II) [(II-A) oder (II-B)] eine Löslichkeit in Wasser von wenigstens 1 g/l bei 20°C und Normaldruck besitzen.

2. Inkjet-Druckverfahren wobei das Verfahren folgende Schritt umfasst:
zur verfügung stellen Inkjet-Tinten,
**dadurch gekennzeichnet, daß** wenigstens eine Farbtinte wenigstens eine wasserlösliche Verbindung der allgemeinen Formeln (I), (II-A) oder (II-B) nach Anspruch 1 enthält.

3. Inkjet-Verfahren nach Anspruch 1 oder 2, **dadurch gekennzeichnet, daß** die wenigstens eine wasserlösliche Verbindung der allgemeinen Formeln (III) oder (IV)ist 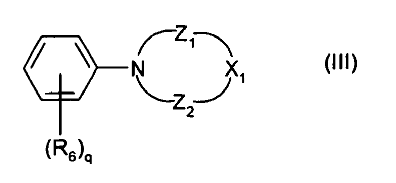 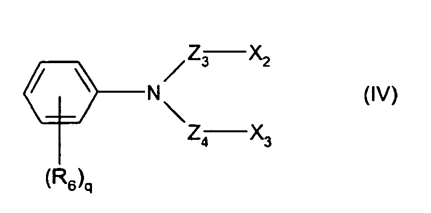 worin
Z₁, Z₂, Z₃, Z₄, X₁, X₂, X₃ die vorstehend für (I) bzw. (II-A) genannte Bedeutung besitzen,
R₆ Alkyl, Alkoxy, Acyl, Acyloxy, Acylamino, Sulfo, Carboxy oder Hydroxy und
q eine ganze Zahl 1 bis 5 bedeuten.

4. Inlcjet-Verfahren nach Anspruch 3, **dadurch gekennzeichnet, daß** wenigstens ein Rest R₆ in den Formeln (III) und (IV) ein Alkoxyrest in o- oder p-Stellung ist.

5. Inkjet-Verfahren gemäß einem der Ansprüchen 1 bis 4, **dadurch gekennzeichnet, daß** die Verbindungen der Formeln (I) bis (IV) über eine polymerisierbare oder eine funktionelle Gruppe Teil eines Homo-, Co- oder Pfropfpolymerisates sind.

6. Inkjet-Material, **dadurch gekennzeichnet, daß** die Verbindungen der Formeln (I) bis (IV) im Inkjet-Material in einer Menge von 10 bis 5000 mg/m² eingesetzt werden.

7. Inkjet-Material nach Anspruch 6, **dadurch gekennzeichnet, daß** das Inkjet-Material Abstandhalter enthält.

8. Inkjet-Material nach Anspruch 6 oder 7, **dadurch gekennzeichnet, daß** das Material in einer Schicht, die weiter vom Träger entfernt ist als die Schichten, die die Verbindungen der Formeln I bis IV enthalten, einen UV-Absorber enthält.

9. Verwendung von wenigstens eine wasserlösliche Verbindung der Formeln (I) bis (IV) gemäß einem der Ansprüchen 1 bis 5 in eine Inkjet-Tinte für die Verbesserung des Lichtschutzes von Inkjet-Farbstoffen.

10. Verwendung nach Anspruch 9, **dadurch gekennzeichnet, daß** die Verbindungen der Formeln (I) bis (IV) in eine Inkjet-Tinte in einer Konzentration von 1 bis 200 g/l eingesetzt werden.

## Claims

1. An ink-jet printing process, comprising the following step:
providing an ink-jet material **characterised in that** said material contains at least one water-soluble compound corresponding to the general formulae (I), (II-A) or (II-B): 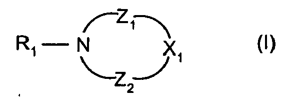
wherein
R₁ represents H, alkyl, aryl, alkoxy, aryloxy or hydroxy,
Z₁ represents C₁-C₅ alkylene,
Z₂ represents C₁-C₅ alkylene or -Z₅-X₄-Z₆-,
Z₅ represents C₁-C₄ alkylene,
Z₆ represents a single bond, methylene or ethylene,
X₁ 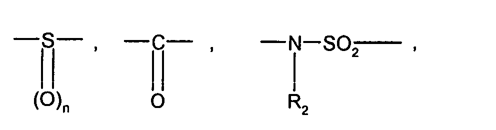 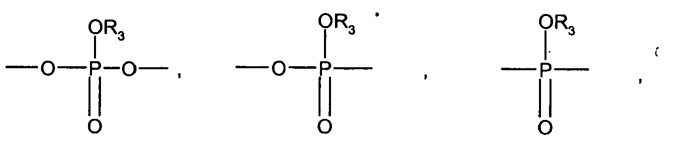 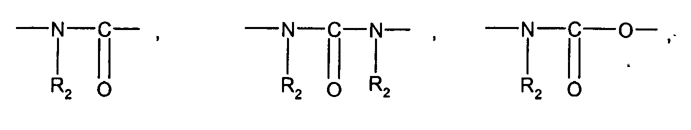 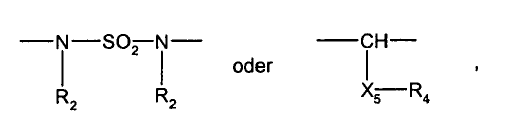
(oder = or)
X₄ represents X₁ or -O-
X₅ ―O― oder 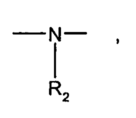
(oder = or)
R₂ represents H or alkyl,
R₃ represents H, alkyl or aryl,
R₄ represents acyl, and
n represents 0, 1 or 2; 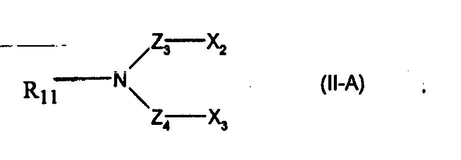
wherein
R₁₁ represents H, substituted alkyl, aryl, alkoxy or aryloxy,
Z₃, Z₄ represents C₁-C₆ alkylene,
X₂ represents acyl, acyloxy, acylamino, carboxy, sulpho, a phosphoric acid residue, alkoxy, hydroxy or alkyl,
X₃ represents H or X₂; or 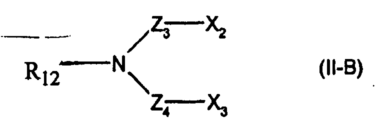
wherein
R₁₂ represents unsubstituted alkyl,
Z₃, Z₄ represents C₁-C₆ alkylene,
X₂, X₃ represents acyl, acyloxy, acylamino, carboxy, sulpho, a phosphoric acid residue, alkoxy, hydroxy or alkyl,
wherein the compounds which contain an acid group may also be present as the salt, the heterocycle of formula (I) has 5 to 8 ring atoms and the compounds corresponding to the formulae (I) and (II) [(II-A) or (II-B)] have a solubility in water of at least 1 g/l at 20°C and standard pressure.

2. An ink-jet printing process comprising the following step:
providing ink-jet inks, wherein at least one coloured ink contains at least one water-soluble compound corresponding to the general formulae (I), (II-A) or (II-B) as defined in claim 1.

3. The ink-jet process according to claim 1 or 2, wherein said at least one water-soluble compound is corresponding to the general formulae (III) or (IV) 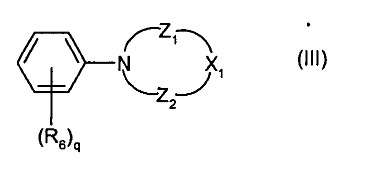 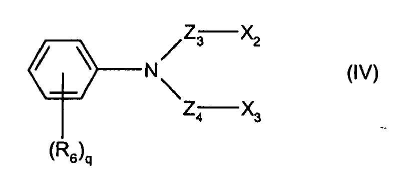 wherein
Z₁, Z₂, Z₃, Z₄, X₁, X₂, X₃ have the meanings given above for resp. (I-A) and (II-A),
R₆ represents alkyl, alkoxy, acyl, acyloxy, acylamino, sulpho, carboxy or hydroxy, and
q represents an integer from 1 to 5.

4. The ink-jet process according to claim 3, wherein at least one R₆ radical in formulae (III) and (IV) is an alkoxy radical in the o- or p-position.

5. The ink-jet process according to anyone of claims 1 to 4, wherein the compounds corresponding to the formulae (I) to (IV) are part of a homo-, co- or graft polymer via a polymerisable or functional group.

6. An ink-jet material, wherein the compounds corresponding to the formulae (I) to (IV) are used in the ink-jet material in an amount of 10 to 5000 mg/m².

7. The ink-jet material according to claim 6, wherein the ink-jet material contains spacers.

8. The ink-jet material according to claim 6 or 7, wherein the material contains an UV absorber in a layer that is farther removed from the support than the layers containing the compounds of the formulae (I) to (IV).

9. Use of at least one water-soluble compound corresponding to the formulae (I) to (IV) as defined in anyone of the claims 1 to 5 in an ink-jet ink for improving the fade protection of ink-jet dyes.

10. The use according to claim 9, wherein the compounds corresponding to the formulae (I) to (IV) are used in an ink-jet ink in a concentration of 1 to 200 g/l.

## Revendications

1. Procédé d'impression par jet d'encre, le procédé comprenant l'étape suivante consistant à :
procurer un matériau pour jet d'encre **caractérisé en ce que** le matériau contient au moins un composé hydrosoluble répondant aux formules générales (I), (II-A) ou (II-B) : 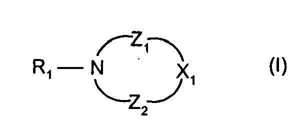
dans laquelle
R₁ représente un atome d'hydrogène, un groupe alkyle, un groupe aryle, un groupe alcoxy, un groupe aryloxy ou un groupe hydroxyle,
Z₁ représente un groupe alkylène en C₁-C₅,
Z₂ représente un groupe alkylène en C₁-C₅ ou un groupe -Z₅-X₄-Z₆-,
Z₅ représente un groupe alkylène en C₁-C₄,
Z₆ représente une liaison simple, un groupe méthylène ou un groupe éthylène,
X₁ représente un groupe 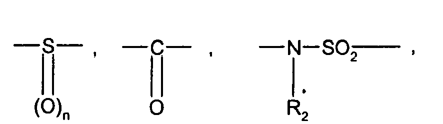 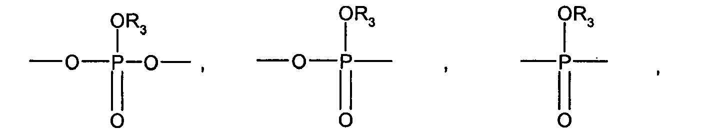 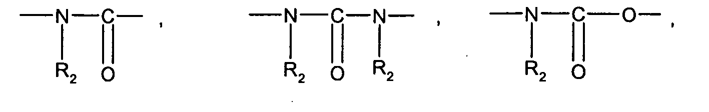 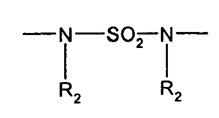 ou 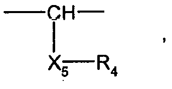
X₄ représente X₁ ou un atome d'oxygène ;
X₅ représente un groupe 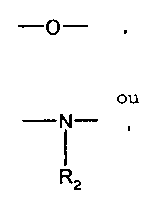
R₂ représente un atome d'hydrogène ou un groupe alkyle,
R₃ représente un atome d'hydrogène, un groupe alkyle ou un groupe aryle,
R₄ représente un groupe acyle, et
n représente 0, 1 ou 2; 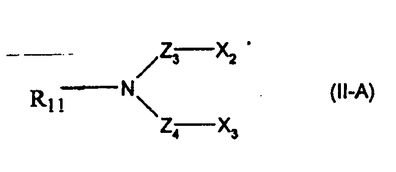
dans laquelle
R₁₁ représente un atome d'hydrogène, un groupe alkyle substitué, un groupe aryle, un groupe alcoxy ou un groupe aryloxy,
Z₃, Z₄ représentent un groupe alkylène en C₁-C₆,
X₂ représente un groupe acyle, un groupe acyloxy, un groupe acylamino, un groupe carboxyle, un groupe sulfo, un résidu d'acide phosphorique, un groupe alcoxy, un groupe hydroxyle ou alkyle,
X₃ représente un atome d'hydrogène ou un groupe X₂ ; ou bien 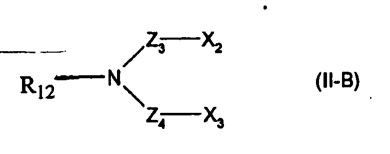
dans laquelle
R₁₂ représente un groupe alkyle non substitué,
Z₃, Z₄ représentent un groupe alkylène en C₁-C₆,
X₂, X₃ représentent un groupe acyle, un groupe acyloxy, un groupe acylamino, un groupe carboxyle, un groupe sulfo, un résidu d'acide phosphorique, un groupe alcoxy, un groupe hydroxyle ou un groupe alkyle,
dans lequel les composés contenant un groupe acide peuvent également être présents sous la forme d'un sel, le groupe hétérocyclique répondant à la formule (I) possède de 5 à 8 atomes cycliques, et les composés répondant aux formules (I) et (II) [(II-A) ou (II-B)] possèdent une solubilité dans l'eau d'au moins 1 g/l à 20 °C et sous pression normale.

2. Procédé d'impression par jet d'encre, dans lequel le procédé comprend l'étape suivante consistant à :
procurer des encres pour jet d'encre,
**caractérisé en ce qu'**au moins une encre d'impression contient au moins un composé hydrosoluble répondant aux formules générales (I), (II-A) ou (II-B) comme défini à la revendication 1.

3. Procédé d'impression par jet d'encre selon la revendication 1 ou 2,
**caractérisé en ce que** ledit au moins un composé hydrosoluble répondant aux formules générales (III) ou (IV) est 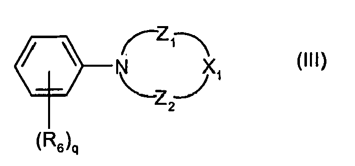 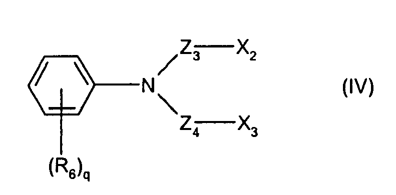 dans lesquelles
Z₁, Z₂, Z₃, Z₄, X₁, X₂, X₃ ont la signification indiquée ci-dessus pour (I) respectivement (II-A),
R₆ représente un groupe alkyle, un groupe alcoxy, un groupe acyle, un groupe acyloxy, un groupe acylamino, un groupe sulfo, un groupe carboxyle ou un groupe hydroxyle, et
q représente un nombre entier de 1 à 5.

4. Procédé d'impression par jet d'encre selon la revendication 3, **caractérisé en ce qu'**au moins un radical R₆ dans les formules (III) et (IV) représente un radical alcoxy en position o ou p.

5. Procédé d'impression par jet d'encre selon l'une quelconque des revendications 1 à 4, **caractérisé en ce que** les composés répondant aux formules (I) à (IV) font partie, via un groupe polymérisable ou via un groupe fonctionnel, d'un homopolymère, d'un copolymère ou d'un polymère greffé.

6. Matériau d'impression par jet d'encre, **caractérisé en ce que** les composés répondant aux formules (I) à (IV) dans le matériau pour jet d'encre sont mis en oeuvre en une quantité de 10 à 5000 mg/m².

7. Matériau d'impression par jet d'encre, selon la revendication 6, **caractérisé en ce que** le matériau pour jet d'encre contient des écarteurs.

8. Matériau d'impression par jet d'encre selon la revendication 6 ou 7, **caractérisé en ce que** le matériau contient, dans une couche, qui est plus éloignée du support que les couches qui contiennent les composés répondant aux formules I à IV, un absorbant de l'ultraviolet.

9. Utilisation d'au moins un composé hydrosoluble répondant aux formules (I) à (IV) selon l'une quelconque des revendications 1 à 5, dans une encre d'impression par jet d'encre pour améliorer la protection de colorants d'encre d'impression par jet d'encre contre l'effet de la lumière.

10. Utilisation selon la revendication 9, **caractérisée en ce que** les composés répondant aux formules (I) à (IV) sont mis en oeuvre dans une encre d'impression par jet d'encre en une concentration de 1 à 200 g/l.
